# EUROPEAN PATENT SPECIFICATION

(11) **EP 2 808 269 B1**
(45) Date of publication and mention of the grant of the patent: **27.04.2016**
(21) Application number: 14169963.7
(22) Date of filing: 27.05.2014
(51) Int. Cl.: B65D 85/816

(54) **Capsule for making an infused drink**
Kapsel zur Herstellung eines Brühgetränks
Capsule pour préparer une boisson infusée

(30) Priority: 30.05.2013 IT BS20130081
(43) Date of publication of application: 03.12.2014
(73) Proprietor: Capitani S.r.l., 22070 Solbiate (CO) (IT)
(72) Inventor: Capitani, Gionata, I-22070 Solbiate (CO) (IT)
(74) Representative: Chimini, Francesco

(56) References cited:
- WO-A1-2010/076698
- WO-A1-2010/128844
- US-A- 4 136 202

## Description

The present invention relates to a capsule containing an aromatic substance for making an infused drink such as coffee, tea, herb teas, fruit juices etc.

Capsules for use with machines for making an infused drink comprise a tray-like body containing an aromatic substance.

In a known embodiment, a machine functioning with capsules is provided with an infusion group comprising a female infusor which delimits an infusion chamber suitable to receive the capsule and acting in conjunction with a perforation tip suitable for perforating the end wall of the capsule to introduce into the capsule the infusion liquid, for example water. The capsule is closed by a film, normally a filtering film, for example, provided with holes and/or made of a permeable material, for example paper or cellulose, which permits the exit of the infused drink from the capsule.

The infusion group comprises a male infusor which, during infusion, is placed in contact with the female infusor to seal the infusion chamber. The front side of the male infusor, facing the filtering film of the capsule, is provided with a plurality of exit holes of the infused drink, which receive the drink from the infusion chamber and which are in fluidic communication with a dispenser duct of the drink.

In one embodiment, said exit holes are made in as many perforating points of the male infusor suitable to perforate a sealing film which may thus be impermeable or otherwise suitable to hermetically close the tray-shaped body. Examples of capsules for making an infused drink according to the preamble of appended claim 1 are disclosed in US 4 136 202 A, WO 2010/076698 A1 and WO 2010/128844 A1.

In any case, during the infusion process it may however happen that, on account of the pressure of the liquid in the infusion chamber, the sealing film and/or walls themselves of the capsule, if made of paper material, are deformed and/or rupture and/or become impregnated, obstructing the exit holes of the drink made in the male infusor.

The aim of the present invention is to propose a capsule able to overcome such drawback.

Such purpose is achieved by a capsule according to claim 1.

The characteristics and advantages of the capsule according to the invention will be evident from the description given below, by way of a non-limiting example of embodiments thereof, according to the appended drawings. In said drawings:
- Figure 1 is an exploded perspective view of a capsule according to the invention in a first embodiment;
- Figure 2 is an exploded perspective view of a capsule in a second embodiment;
- Figure 3 schematically represents the assembled capsule in an embodiment variant;
-Figure 4 schematically represents a capsule inserted in an infusion group; and
- Figure 5 is an exploded perspective view of a capsule in a further embodiment and of a male infusor suitable for the perforation of said capsule.

In the course of the description below, the elements of the capsule 10 according to the invention common to the various embodiments described will be indicated using the same reference numerals.

In a general embodiment, the capsule 10 for making an infused drink comprises a tray-shaped body 12, for example substantially cylindrical or frustoconical. Said body 12 comprises a base or bottom wall 121, a side wall 122 and, opposite said end wall, an open end 14. For example, the tray-shaped body 12 may advantageously be made of cellulose or from a sheet of paper or paper material. Advantageously the tray-shaped body 12 is made entirely in one piece.

Paper material is taken to mean not only the widely used material made from wood or cellulose pulp, but also made from other fibres such as cotton, linen, hemp as well as, obviously, recycled paper.

The bottom wall 121 may be made integrally with the tray-like body 12, or may be attached to the side wall 122. Moreover, said bottom wall 121 may be completely closed or have holes or be made with a filter or permeable material, so as to allow, depending on the infusion machine used, the entrance of the infusion liquid or extraction of the infused drink.

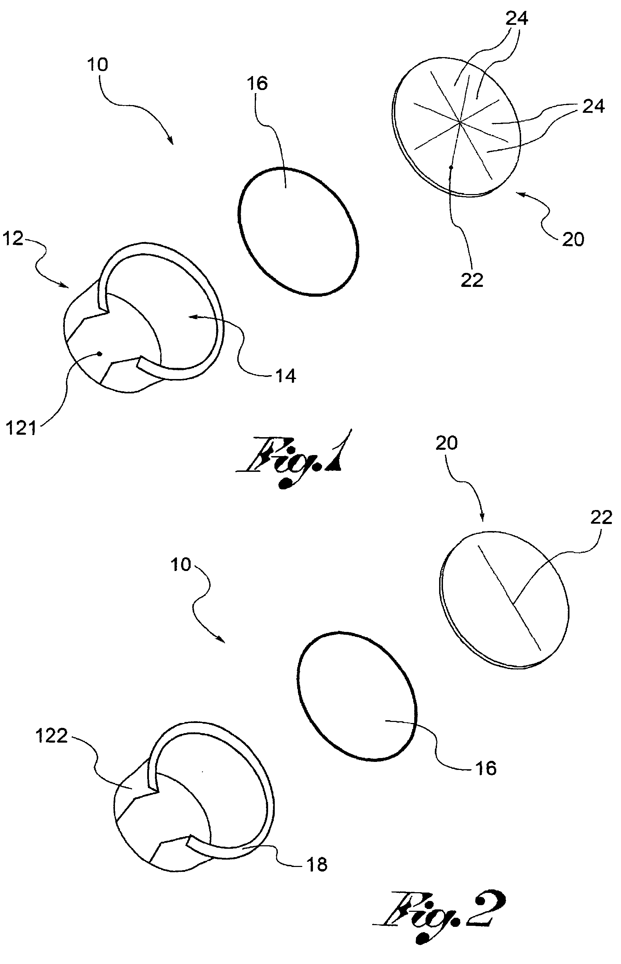

In one embodiment shown in figures 1-4, a sealing film 16, preferably also made from paper or paper material, is attached to said open end 14 of the tray-like body.

In one embodiment, the sealing film 16 is suitable to allow the passage of the infused drink from the inside of the tray-shaped body 12 outwards. For example, said sealing film 16 is made in a filtering material or material permeable to the infused drink and/or provided with a plurality of holes.

In one embodiment variation, the sealing film 16 is made from an impermeable material so as to hermetically seal the open end 14 of the tray-shaped body 12. In this case, the sealing film 16 is perforated during the infusion step by perforation tips made in one of the parts, male or female, of an infusion group.

The capsule is further provided with a peripheral annular rim 18 suitable for abutting with a support surface which surrounds an infusion chamber of an infusion group when the capsule is inserted in said chamber.

The capsule 10 further comprises a protective cover 20 coupled to said sealing film 16 and suitable to interact, in the manner described below, with an infusor in which passages are made for the transit of the infused drink. At least one cut 22 is made in said protective cover 20 suitable to permit the passage of the infused drink or at least one pre-cutting line 22' suitable for forming a cut to permit the passage of the infused drink.

According to one aspect of the invention, the protective cover 20 has a greater rigidity that of the sealing film 16. Said greater rigidity is given by a greater thickness and/or by a material intrinsically more rigid than that which the sealing film 16 is made from. In other words, unlike the sealing film 16, the protective cover 20 is suitable to resist the action of the pressurised infusion liquid in such a way as not to produce fragments which could go to obstruct the exit holes of the infused drink made in the infusor.

For example, the protective cover 20 is made of cellulose.

In particular, the protective cover 20 is suitable to permit the passage of the infused drink through the at least one cut 22 when the pressure of the infusion liquid inside the capsule is greater than the pressure sufficient to allow the passage of the infused drink through the sealing film 16 in the absence of the protective cover 20.

In one embodiment illustrated in Figure 1, the protective cover 20 is made of a plurality of radial cuts 22 which intersect in the centre of the protective cover 20. In other words, each of said radial cuts 22 extends from the centre of the protection cover as far as the peripheral rim. Said radial cuts 22 define a plurality of strips 24 suitable for flexing on the basis of the pressure of the infusion liquid inside the capsule 10. It is to be noted that the flexing of said strips 24 is in any case limited by the front abutment provided by the infusor in which the exit holes of the infused drink are made. Such a limitation to the excursion of the strips 24 makes it possible to control, and in particular to slow down, the flow of the infused drink coming out of the capsule so as to maintain throughout the infusion a certain level of pressure inside the infusion chamber, and thus obtain a better emulsion of the drink.

In the embodiment variant illustrated in figure 2, only one diametrical cut 22 is made in the protective cover 20 which extends as far as the peripheral rim of the cover.

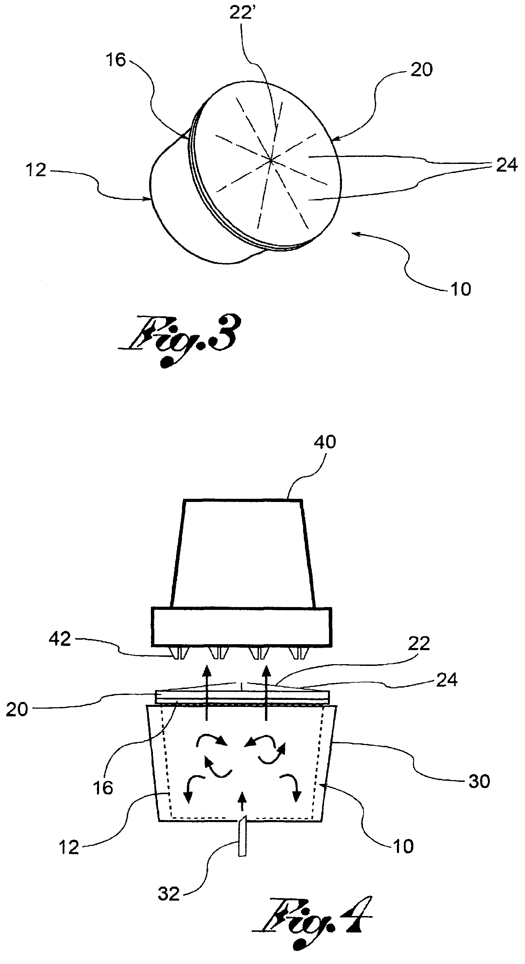

In one embodiment, illustrated for example in figure 3, said radial cuts are made in the form of pre-cuts 22', i.e. they are not continuous cuts but have some interruptions connecting the parts of the cover to each other, for example, the plurality of strips 24, identified by such pre-cuts 22'. When the liquid in the infusion chamber reaches a certain pressure level, the pre-cuts break completely allowing the strips to flex.

In one embodiment, the sealing film 16 is welded or glued or mechanically attached, for example by means of a turn-up of its peripheral rim, to the tray-shaped body 12, and in particular to the peripheral rim 18 which defines the open end 14 of said body.

The protective cover 20 may also be welded or glued or mechanically attached to the tray-shaped body or to a peripheral portion of the sealing film 16.

In one embodiment illustrated in the drawings, the protective cover 20 is superposed on the outer side of the sealing film 16, i.e. the side facing the exit holes made in the infusor.

In an embodiment variant not shown, the protective cover 20 is instead positioned internally to the sealing film 16. In this case, the sealing film 16 may be of the waterproof type and resistant to liquids, being perforated at the moment of infusion by the perforating tips of the infusor which the exit holes are made in. The main function of the protective cover 20 in this embodiment is to control, and in particular to slow down, the flow of the drink in output through the cuts 22 so as to obtain a high quality drink, as mentioned above.

Figure 4 schematically illustrates the capsule 10 according to the invention used in an infusion group comprising a female infusor 30, which the capsule 10 is inserted in, and a male infusor 40, suitable to abut against the female infusor 30. When the group is closed to produce the infused drink, the two infusors 30, 40 jointly define an infusion chamber in which the infusion of the aromatic substance by means of an infusion liquid, for example water takes place.

To such purpose, the female infusor 30 acts in conjunction with a perforating tip 32 suitable to perforate the bottom wall 121 of the capsule to introduce the infusion liquid into the capsule. The male infusor 40 is provided, on the side facing the female infusor, with a plurality of exit holes 42 of the infused drink, which receive the drink from the infusion chamber and which are in fluidic communication with a dispenser duct of the drink.

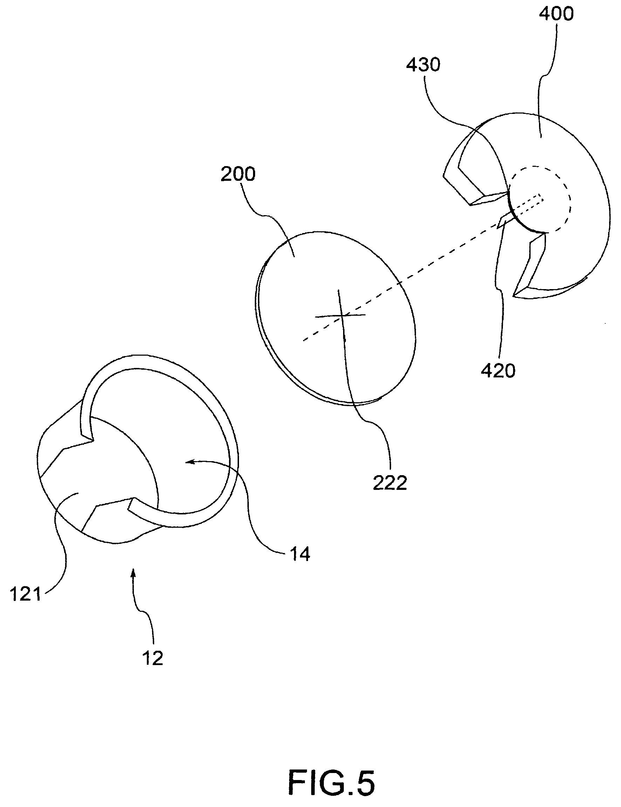

In an embodiment variant illustrated in figure 5, the tray-shaped body 12, made of cellulose or a sheet of paper or paper material, such as filter paper, is applied to a cover 200 made of a rigid material. The cover 200 has structural characteristics similar to those of a plastic material but is biodegradable or compostable. For example it can be made from pellets, resins or films. As well as for closing the capsule, said cover 200 is used to structurally stiffen the capsule, especially if this is of a large size and if the cellulose casing is of filter paper and thus very soft.

On account of its rigidity, the cover 200 requires a needle to be penetrated and permit, through said needle, the injection of water to perform the infusion or for the extraction of the infused drink.

Figure 5 schematically illustrates the front part of a male infusor 400 fitted with a water injection needle 420 suitable to perforate the cover 200.

In order to help the needle to penetrate the cover 200, the latter is provided with cuts or pre-cuts 222, preferably radial, as for the protective cover 20 of the embodiments previously described.

It is to be noted that the cuts or pre-cuts 22; 222 have a lesser radial extension than the radius of an annular sealing element 430 placed around the injection needle 420, so as not to jeopardise the seal of said sealing element 430 on the cover 20; 200 of the capsule. For example, such annular sealing element 430 has a diameter of 15 mm.

In a preferred embodiment, the cover 200 is welded directly to the tray-shaped body in cellulose.

Thanks to the presence of the protective cover 20, more rigid and less deformable than the sealing film 16, the drink, after passing through the sealing film, seeps into the cuts made in the protective cover to reach the exit holes of the male infusor. Said exit holes are thus protected from possible contact with the sealing film which, given its light consistency, could obstruct it during the infusion.

In addition, advantageously, the presence of the cuts or pre-cuts and flexible strips defined thereby permits the passage of the infused drink only upon attainment of a given pressure of liquid in the infusion chamber. The flexible strips, in this pressure condition, continue to switch between an open position and a closed position of the exit holes, creating i.e. an effect of opening/closing said holes, which leads to an increase of the internal pressure of the liquid in the capsule and therefore to an improvement of the extraction.

A person skilled in the art may make modifications and variations to the embodiments of the capsule according to the invention, replacing elements with others functionally equivalent so as to satisfy contingent requirements while remaining within the scope of protection of the following claims.

For example, in one embodiment not illustrated, suitable for application in an infusion group in which the introduction of the infusion liquid takes place through the male infusor and the extraction of the infused drink takes place through the female infusor, the protective cover 20 is coupled to the bottom wall 121 of the tray-shaped body.

Each of the characteristics described as belonging to a possible embodiment may be realised independently of the other embodiments described.

## Claims

1. Capsule for making an infused drink, comprising a tray-shaped body (12) comprising a bottom wall (121), a side wall (122), an open end (14), said capsule comprising in addition a cover (20; 200) suitable for interacting with an infusor (40; 400) in which passages (42; 420) are made for the transit of the infusion water or of the infused drink, at least one cut (22; 222) suitable for permitting the passage of the infused drink or at least one pre-cutting line (22') suitable for forming a cut to permit the passage of the infused drink being made in said protective cover (20; 200), **characterised in that** a plurality of radial cuts (22;222) or of radial pre-cutting lines (22') which intersect in the centre of the cover (20; 200) are made in the cover (20; 200).

2. Capsule according to the previous claim, comprising a sealing film (16) applied to said open end of the tray-shaped body, the cover (20) being coupled to said sealing film or to said bottom wall (121).

3. Capsule according to claim 1 or 2, wherein said cover (20; 200) is made in a material or of such a thickness as to have a greater rigidity than that of the sealing film (16) or of the tray-shaped body (10).

4. Capsule according to claim 2 or 3, wherein the cover (20) is suitable for permitting the passage of the infused drink through the at least one cut (22) when the pressure of the infusion liquid inside the capsule is greater than the pressure sufficient to permit the passage of the infused drink through the sealing film or the end wall in the absence of the cover.

5. Capsule according to the previous claim, wherein said radial cuts or pre-cutting lines define a plurality of strips (24) suitable for flexing on the basis of the pressure of the liquid inside the capsule.

6. Capsule according to any of the claims 2-5, wherein the cover (20) is positioned externally to the sealing film (16) or the bottom wall (121).

7. Capsule according to any of the claims 2-6, wherein the sealing film (16) is made in a filtering material or material permeable to the infused drink and/or provided with a plurality of holes.

8. Capsule according to any of the claims 2-6, wherein the cover (20) is in contact with the inner side of the sealing film (16) or bottom wall (121).

9. Capsule according to the previous claim, wherein the sealing film (16) is made from an impermeable material so as to hermetically seal the open end (14) of the tray-shaped body (12).

10. Capsule according to any of the previous claims, wherein the tray-shaped body (12) is made from a cellulose-based material.

11. Capsule according to any of the previous claims, wherein the cover (20; 200) is made from a cellulose-based material.

12. Capsule according to any of the claims 1-10, wherein the cover (200) is made of a rigid, bio-degradable or compostable material, obtained from pellets, resins or films.

13. Capsule according to any of the claims 2-12, wherein the sealing film (16) is made of paper or cellulose.

14. Capsule according to any of the claims from 2-13, wherein the sealing film is welded or glued or mechanically attached to the tray-shaped body.

15. Capsule according to any of the previous claims, wherein the cover (20; 200) is welded or glued or mechanically attached to the tray-shaped body or to a peripheral portion of the sealing film.

## Patentansprüche

1. Kapsel zur Herstellung eines Aufgussgetränks, umfassend einen schalenförmigen Körper (12) umfassend eine untere Wand (121), eine Seitenwand (122), ein offenes Ende (14), wobei die Kapsel zusätzlich umfasst eine Decke (20; 200), welche geeignet ist, mit einem Aufgussstück (40; 400) zu interagieren, in welches Durchgänge (42; 420) für den Durchgang des Aufgusswassers oder des Aufgussgetränks gemacht sind, wenigstens einen Schnitt (22; 222), welcher geeignet ist, den Durchgang des Aufgussgetränks zu ermöglichen, oder wenigstens eine vorgeschnittene Linie (22'), welche geeignet ist, einen Schnitt zu bilden, welcher in die Schutzdecke (20; 200) gemacht wird, um den Durchgang des Aufgussgetränks zu ermöglichen, **dadurch gekennzeichnet, dass** eine Vielzahl von radialen Schnitten (22; 222) oder von radialen vorgeschnittenen Linien (22') in die Decke (20;200) gemacht sind, welche sich im Mittelpunkt der Decke (20; 200) schneiden.

2. Kapsel nach dem vorhergehenden Anspruch, umfassend eine Dichtfolie (16), welche auf das offene Ende des schalenförmigen Körpers aufgebracht ist, wobei die Decke (20) mit der Dichtfolie oder der unteren Wand (121) verbunden ist.

3. Kapsel nach Anspruch 1 oder 2, wobei die Decke (20; 200) aus einem Material gemacht ist oder eine solche Dicke aufweist, dass sie eine Festigkeit aufweist, die größer ist als diejenige der Dichtfolie (16) oder diejenige des schalenförmigen Körpers (10).

4. Kapsel nach Anspruch 2 oder 3, wobei die Decke (20) geeignet ist, um den Durchgang des Aufgussgetränks durch den wenigstens einen Schnitt (22) zu ermöglichen, wenn der Druck der Aufgussflüssigkeit innerhalb der Kapsel größer ist als der Druck, welcher ausreichend ist, um den Durchgang des Aufgussgetränks durch die Dichtfolie oder die Endwand zu ermöglichen, wenn die Decke nicht vorhanden ist.

5. Kapsel nach dem vorhergehenden Anspruch, wobei die radialen Schnitte oder vorgeschnittenen Linien eine Vielzahl von Streifen (24) definieren, welche zum Biegen durch den Druck der Flüssigkeit innerhalb der Kapsel geeignet sind.

6. Kapsel nach einem der Ansprüche 2-5, wobei die Decke (20) außerhalb der Dichtfolie (16) oder der unteren Wand (121) angeordnet ist.

7. Kapsel nach einem der Ansprüche 2-6, wobei die Dichtfolie (16) aus einem Filtermaterial oder einem Material gemacht ist, welches für das Aufgussgetränk durchlässig ist und/oder mit einer Vielzahl von Löchern bereitgestellt ist.

8. Kapsel nach einem der Ansprüche 2-6, wobei die Decke (20) mit der inneren Seite der Dichtfolie (16) oder der unteren Wand (121) in Kontakt steht.

9. Kapsel nach dem vorhergehenden Anspruch, wobei die Dichtfolie (16) aus einem undurchlässigen Material gemacht ist, so dass sie das offene Ende (14) des schalenförmigen Körpers (12) hermetisch versiegelt.

10. Kapsel nach einem der vorhergehenden Ansprüche, wobei der schalenförmige Körper (12) aus einem Cellulose-basierten Material gemacht ist.

11. Kapsel nach einem der vorhergehenden Ansprüche, wobei die Decke (20; 200) aus einem Cellulose-basierten Material gemacht ist.

12. Kapsel nach einem der Ansprüche 1-10, wobei die Decke (200) aus einem festen bio-abbaubaren oder kompostierbaren Material gemacht ist, welches aus Pellets, Harzen oder Filmen erhalten wurde.

13. Kapsel nach einem der Ansprüche 2-12, wobei die Dichtfolie (16) aus Papier oder Cellulose gemacht ist.

14. Kapsel nach einem der Ansprüche 2-13, wobei die Dichtfolie an den schalenförmigen Körper geschweißt oder geklebt oder mechanisch befestigt ist.

15. Kapsel nach einem der vorhergehenden Ansprüche, wobei die Decke (20; 200) an den schalenförmigen Körper oder an einen peripheren Teil der Dichtfolie geschweißt oder geklebt oder mechanisch befestigt ist.

## Revendications

1. Capsule pour faire une boisson infusée, comprenant un corps en forme de plateau (12) comprenant une paroi inférieure (121), une paroi latérale (122), une extrémité ouverte (14), ladite capsule comprenant en outre un couvercle (20 ; 200) adapté pour interagir avec un infuseur (40 ; 400), dans lequel des passages (42 ; 420) sont réalisés pour le passage de l'eau d'infusion ou de la boisson infusée, au moins une coupe (22 ; 222) adaptée pour permettre le passage de la boisson infusée ou au moins une ligne de précoupe (22') adaptée pour former une coupe pour permettre le passage de la boisson infusée étant réalisée dans ledit couvercle de protection (20 ; 200), **caractérisée en ce qu'**une pluralité de coupes radiales (22 ; 222) ou de lignes de précoupe radiales (22') qui se coupent au centre du couvercle (20 ; 200), est réalisée dans le couvercle (20 ; 200).

2. Capsule selon la revendication précédente, comprenant un film étanche (16) appliqué sur ladite extrémité ouverte du corps en forme de plateau, le couvercle (20) étant couplé audit film étanche ou à ladite paroi inférieure (121).

3. Capsule selon la revendication 1 ou 2, dans laquelle ledit couvercle (20 ; 200) est constitué d'un matériau ou présente une épaisseur, dont la rigidité est plus élevée que celle du film étanche (16) ou du corps en forme de plateau (10).

4. Capsule selon la revendication 2 ou 3, dans laquelle le couvercle (20) est adapté pour permettre le passage de la boisson infusée par l'au moins une coupe (22) lorsque la pression du liquide d'infusion dans la capsule est supérieure à la pression suffisante pour permettre le passage de la boisson infusée par le film étanche ou la paroi d'extrémité en l'absence du couvercle.

5. Capsule selon la revendication précédente, dans laquelle lesdites coupes ou lignes de précoupe radiales définissent une pluralité de bandes (24) adaptées à la flexion sur la base de la pression du liquide dans la capsule.

6. Capsule selon l'une quelconque des revendications 2 à 5, dans laquelle le couvercle (20) est positionné à l'extérieur du film étanche (16) ou de la paroi inférieure (121).

7. Capsule selon l'une quelconque des revendications 2 à 6, dans laquelle le film étanche (16) est réalisé en un matériau filtrant ou matériau perméable à la boisson infusée et/ou doté d'une pluralité de trous.

8. Capsule selon l'une quelconque des revendications 2 à 6, dans laquelle le couvercle (20) est en contact avec le côté intérieur du film étanche (16) ou de la paroi inférieure (121).

9. Capsule selon la revendication précédente, dans laquelle le film étanche (16) est réalisé à partir d'un matériau imperméable de sorte à rendre étanche hermétiquement l'extrémité ouverte (14) du corps en forme de plateau (12).

10. Capsule selon l'une quelconque des revendications précédentes, dans laquelle le corps en forme de plateau (12) est réalisé à partir d'un matériau à base de cellulose.

11. Capsule selon l'une quelconque des revendications précédentes, dans laquelle le couvercle (20 ; 200) est réalisé à partir d'un matériau à base de cellulose.

12. Capsule selon l'une quelconque des revendications 1 à 10, dans laquelle le couvercle (200) est réalisé en un matériau rigide, biodégradable ou compostable obtenu à partir de pellets, résines ou films.

13. Capsule selon l'une quelconque des revendications 2 à 12, dans laquelle le film étanche (16) est constitué de papier ou de cellulose.

14. Capsule selon l'une quelconque des revendications 2 à 13, dans laquelle le film étanche est soudé ou collé ou attaché mécaniquement au corps en forme de plateau.

15. Capsule selon l'une quelconque des revendications précédentes, dans laquelle le couvercle (20 ; 200) est soudé ou collé ou mécaniquement attaché au corps en forme de plateau ou à une partie périphérique du film étanche.
